Europäisches Patentamt

(19) European Patent Office

Office européen des brevets

(11) Numéro de publication: **0 125 934**
**B1**

(12) # FASCICULE DE BREVET EUROPEEN

(45) Date de publication du fascicule du brevet:
28.01.87

(21) Numéro de dépôt: **84400390.5**

(22) Date de dépôt: **28.02.84**

(51) Int. Cl.⁴: **F 16 D 3/84**

(54) Perfectionnements apportés aux joints de transmission.

(30) Priorité: **15.04.83 FR 8306512**

(43) Date de publication de la demande:
**21.11.84 Bulletin 84/47**

(45) Mention de la délivrance du brevet:
**28.01.87 Bulletin 87/5**

(84) Etats contractants désignés:
**DE GB IT**

(56) Documents cités:
**GB - A - 2 012 022**
**GB - A - 2 071 790**
**US - A - 4 224 808**

(73) Titulaire: **AUTOMOBILES CITROEN, 62 Boulevard Victor-Hugo, F-92200 Neuilly-sur-Seine (FR)**
Titulaire: **AUTOMOBILES PEUGEOT, 75, avenue de la Grande Armée, F-75116 Paris (FR)**

(72) Inventeur: **Dore, Jacques Pierre, 191, rue St Denis, F-92700 Colombes (FR)**

(74) Mandataire: **Boivin, Claude, 9, rue Edouard-Charton, F-78000 Versailles (FR)**

## Description

La présente invention concerne un joint de transmission du type comprenant un élément solidaire d'un arbre menant, un élément extérieur coopérant avec l'élément intérieur et solidaire d'un arbre mené, et une gaine d'étanchéité à soufflet dont les extrémités sont fixées respectivement sur l'arbre menant et sur l'élément extérieur.

Lors du fonctionnement d'un joint de transmission de ce genre, il se produit des variations de température qui entraînent notamment une augmentation de la pression à l'intérieur du joint et une déformation de la gaine d'étanchéité; cette déformation, qui est augmentée par l'effet de la force centrifuge sur la graisse du joint, tend à entraîner une détérioration rapide de la gaine d'étanchéité.

Pour remédier à cet inconvénient, on a réalisé des joints dans lesquels l'espace intérieur de la gaine était mis à l'atmosphère par un dispositif interposé entre l'arbre menant et la gaine et muni à cet effet d'une gorge intérieure.

C'est ainsi que le brevet FR-A-2.414.145 décrit un joint de transmission dans lequel le dispositif de mise à l'atmosphère est constitué par une bague élastique fendue qui est disposée entre la gaine d'étanchéité et l'arbre menant et est conformé de manière à laisser un passage d'air le long de l'arbre menant lorsque le manchon de la gaine est serré sur cet arbre.

Mais ce dispositif de mise à l'atmosphère présente un certain nombre d'inconvénients. Lorsque l'arbre menant ne présente pas de gorge au niveau du maintien du soufflet, la bague élastique qui présente un coefficient de frottement relativement faible, inférieur à celui de la gaine, peut glisser sur l'arbre menant. D'autre part, dans le cas de joints de transmission coulissants, dans lesquels le volume interne du joint peut varier rapidement, il arrive que la graisse contenue dans la gaine sorte par la gorge de mise à l'atmosphère de la bague.

Le brevet US-A-4,224,808 décrit un joint de transmission qui est muni d'un dispositif de mise à l'atmosphère interposé entre l'arbre menant et la gaine et comporte sur sa face interne une gorge présentant une chicane. Mais ce dispositif de mise à l'atmosphère présente la forme d'un cylindre qui comporte seulement une fente longitudinale et est pratiquement fermé une fois mis en place de sorte qu'il n'y a aucun contact direct entre la gaine et l'arbre menant. Or ce dispositif étant en matière plastique peut glisser sur l'arbre et il est nécessaire de prévoir sur l'arbre une gorge dans laquelle vient se positionner le dispositif de mise à l'air libre.

La présente invention a pour objet un joint de transmission muni d'un dispositif de mise à l'atmosphère et palliant les inconvénients qui viennent d'être signalés.

Selon la présente invention, le dispositif de mise à l'atmosphère est constitué par un élément qui a la forme d'une portion de cylindre présentant suivant sa circonférence une zone de plus grande largeur sur la face interne de laquelle est réalisée la chicane, et une zone de plus faible largeur sur la face interne de laquelle la gorge s'étend axialement.

Lorsque l'élément en forme de portion de cylindre est interposé entre l'arbre menant et la gaine, le contact entre le caoutchouc de la gaine et le métal de l'arbre est conservé sur la plus grande partie de la circonférence de l'arbre. Ledit élément est donc parfaitement maintenu et ne peut glisser. La chicane que comporte la gorge évite les fuites de graisse.

La gorge débouche, de préférence, par l'intermédiaire de deux rainures s'étendant sensiblement dans un plan perpendiculaire à la direction longitudinale de l'élément.

L'élément de mise à l'atmosphère peut comporter, sur la face externe de sa zone de plus faible largeur, une gorge dans laquelle est maintenue serrée l'extrémité correspondante de la gaine d'étanchéité.

La face externe de la zone de plus grande largeur de l'élément peut comporter une gorge dans laquelle est engagé un bracelet de serrage maintenant l'élément serré sur l'arbre menant.

On a décrit ci-après, à titre d'exemple non limitatif, un mode de réalisation du joint de transmission selon l'invention, avec référence au dessin annexé dans lequel:

la Figure 1 est une vue en coupe axiale de ce joint;

la Figure 2 montre ce dispositif de mise à l'atmosphère vu de l'intérieur;

la Figure 3 est une vue en coupe longitudinale, l'élément de mise à l'atmosphère étant coupé suivant III-III de la Figure 2;

la Figure 4 est une vue en bout de l'élément de mise à l'atmosphère;

la Figure 5 montre le dispositif de mise à l'atmosphère vu de l'extérieur.

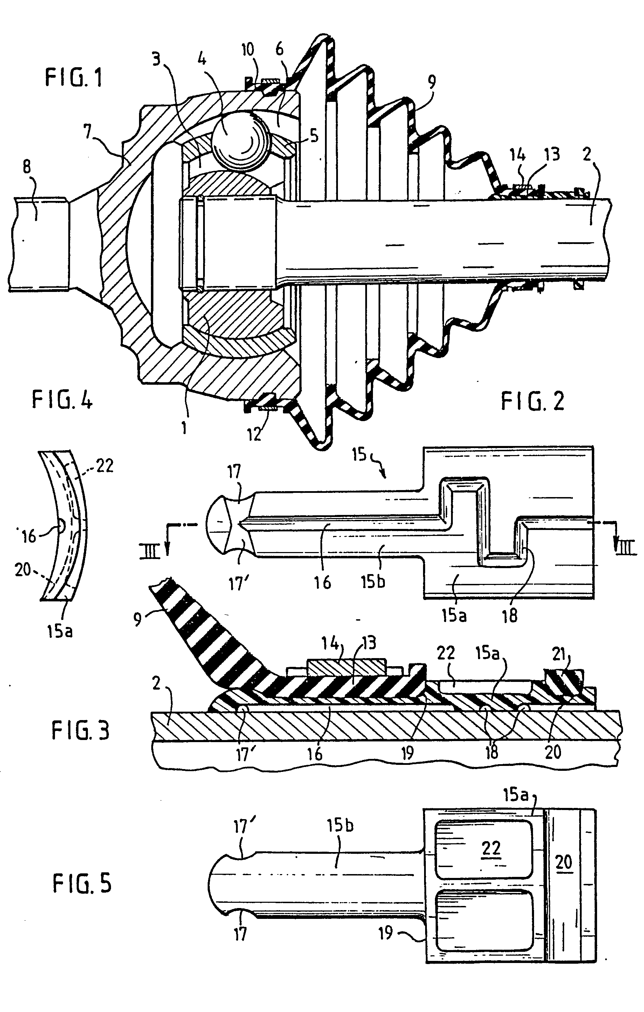

Tel qu'il est représenté à la Figure 1, le joint de transmission qui est ici du type RZEPPA comprend un élément intérieur ou noix 1 solidaire d'un arbre 2 et muni à sa périphérie de gorge 3 dans lesquelles sont engagées des billes 4. Celles-ci sont maintenues dans une cage 5 et engagées par ailleurs dans des gorges 6 ménagées sur la face interne d'un élément extérieur 7 du joint, en forme de bol, qui est solidaire du second arbre 8 du joint.

Une gaine de protection à soufflet 9, en élastomère, présente à l'une de ses extrémités un manchon de fixation 10 engagé dans une gorgé 11 de l'élément extérieur 7 et maintenu en position par un collier de serrage 12. A son autre extrémité, la gaine présente un manchon de fixation 13 qui est fixé sur l'arbre 2 par un collier de serrage 14, avec interposition d'un élément de mise à l'atmosphère 15 qui est réalisé en matière plastique.

Comme on le voit plus particulièrement aux Figures 2 à 5, l'élément 15 présente la forme d'une portion de cylindre, avec un rayon intérieur pratiquement égal au rayon de l'arbre 2 et comprend une zone 15a de plus grande largeur et une zone 15b de plus faible largeur. Sur sa face intérieure en appui sur l'arbre 2 est réalisée une gorge 16 qui, dans la zone de faible largeur 15b est axiale, et débouche dans deux rainures perpendiculaires 17 et 17'. Dans la zone de grande largeur 15a, la gorge est en forme de chicane 18 et débouche à l'extérieur.

Sur la face extérieure de la zone de faible largeur 15b est aménagée une gorge 19 dans laquelle est disposé le manchon de fixation 13. Sur la face extérieure de la zone de grande largeur 15a est formée une gorge 20 dans laquelle est disposé un collier ou bracelet de serrage 21 maintenant l'extrémité de l'élément 15 serré sur l'arbre 2, pour éviter le décollement de l'élément 15 sous l'effet de la force centrifuge. Le serrage de l'élément 15 sur l'arbre 2 pourrait être également réalisé par deux languettes venues de moulage en même temps que l'élément 15, de forme circulaire et destinées à être serrées sur l'arbre par des moyens connus, tels que des moyens de clipsage. La référence 22 désigne des évidements ménagés à côté de la gorge 20 et destinés à alléger la zone de grande largeur 15a et à lui donner plus de souplesse.

Lors du fonctionnement du joint, l'espace intérieur du soufflet 9 communique avec l'atmosphère par l'intermédiaire de la gorge 16 et des perçages 17 et 17'. Mais la graisse contenue dans ce soufflet est empêchée de s'en échapper par la chicane 18.

**Revendications**

1. Joint de transmission comprenant un élément intérieur (1) solidaire d'un arbre menant (2), un élément extérieur (7) coopérant avec l'élément intérieur et solidaire d'un arbre mené (8), une gaine d'étanchéité à soufflet (9) dont les extrémités sont fixées respectivement sur l'arbre menant (2) et sur l'élément extérieur (7), et un dispositif de mise à l'atmosphère qui est interposé entre l'arbre menant (2) et la gaine (9), et présente sur sa surface interne une gorge (16) présentant une chicane (18), caractérisé en ce que le dispositif de mise à l'atmosphère est constitué par un élément qui a la forme d'une portion de cylindre et présente suivant sa circonférence une zone de plus grande largeur (15a) sur la face interne de laquelle est réalisée la chicane (18), et une zone de plus faible largeur (15b) sur la face interne de laquelle la gorge (16) s'étend axialement.

2. Joint de transmission selon la revendication 1, caractérisé en ce que la gorge (16) débouche à l'extérieur par deux rainures (17 et 17') s'étendant sensiblement dans un plan perpendiculaire à la direction longitudinale de l'élément.

3. Joint de transmission selon la revendication 1 ou 2, caractérisé en ce que l'élément (15) de mise à l'atmosphère comporte, sur la face externe de sa zone de plus faible largeur, une gorge (19) dans laquelle est maintenue serrée l'extrémité correspondante de la gaine d'étanchéité (9).

4. Joint de transmission selon les revendications 1 à 3, caractérisé en ce que la face externe de la zone de plus grande largeur (15a) de l'élément de mise à l'atmosphère (15) comporte une gorge (20) dans laquelle est engagé un bracelet de serrage (21) maintenant l'élément serré sur l'arbre menant.

5. Joint de transmission selon l'une des revendications 1 à 4, caractérisé en ce que l'élément (15) de mise à l'atmosphère est en matière plastique.

**Patentansprüche**

1. Transmissionskupplung mit einem Innenelement (1), das fest mit einer treibenden Welle (2) verbunden ist, mit einem mit dem Innenelement zusammenwirkenden Aussenelement (7), das mit einer angetriebenen Welle (8) fest verbunden ist, mit einer Dichtungsmanschette (9), deren Enden einerseits auf der treibenden Welle (2) und andererseits an dem Aussenelement (7) befestigt sind, und mit einer zur Atmosphäre führenden Entlüftungseinrichtung, die zwischen der treibenden Welle (2) und der Manschette (9) angeordnet ist und an ihrer Innenfläche eine eine Umlenkstelle (18) umfassende Rille (17) aufweist, dadurch gekennzeichnet, dass die Entlüftungseinrichtung aus einem Organ gebildet ist, das die Form eines Zylinderabschnittes hat und in Umfangsrichtung eine Zone (15a) grösserer Breite, an deren Innenfläche die Umlenkstelle (18) verwirklicht ist, und eine Zone (15b) mit geringerer Breite aufweist, an denen Innenfläche die Rille (16) in axialer Richtung verläuft.

2. Transmissionskupplung nach Anspruch 1, dadurch gekennzeichnet, dass die Rille (16) nach aussen über zwei Nuten (17, 17') aus mündet, die sich im wesentlichen in einer Ebene erstrecken, die senkrecht zur Längsrichtung des Organs liegt.

3. Transmissionskupplung nach Anspruch 1 oder 2, dadurch gekennzeichnet, dass das Element (15), das die Entlüftungseinrichtung bildet, auf der Aussenseite seiner Zone geringerer Breite eine Ausnehmung (19) hat, in der das zugeordnete Ende der Dichtungsmanschette (9) klemmend festgehalten ist.

4. Transmissionskupplung nach einem der Ansprüche 1 bis 3, dadurch gekennzeichnet, dass die Aussenseite der Zone grösserer Breite (15a) des Entlüftungsorgans (15) eine Nut (20) aufweist, in die ein Klemmring (21) eingelegt ist, der das Organ auf der treibenden Welle festhält.

5. Transmissionskupplung nach einem der Ansprüche 1 bis 4, dadurch gekennzeichnet, dass das Entlüftungsorgan (15) aus Kunststoff besteht.

**Claims**

1. Transmission joint including an inner element (1) integral with a drive shaft (2), an external element (7) cooperating with the internal element and integral with a driven shaft (8), a sealing sheath in the form of a bellows (9) whose ends are fixed respectively to the drive shaft (2) and to the external element (7), and a device for venting to the atmosphere which is inserted between the drive shaft (2) and the sheath (9) and has on its inner surface a channel (16) with a baffle (18), characterized in that the device for venting to the atmosphere is formed by an element which has the form of a cylinder portion with along its circumference a zone of greater width (15a) on the internal face of which the baffle (18) is formed and a zone of smaller width (15b) on the internal face of which the channel (16) extends axially.

2. Transmission joint according to claim 1, characterized in that the channel (16) opens externally through two grooves (17 and 17') extending substantially in a plane perpendicular to the longitudinal direction of the element.

3. Transmission joint according to claim 1 or 2, characterized in that the element (15) for venting to the atmosphere has, on the external face of its narrowest zone, a channel (19) in which the corresponding end of the sealing sheath (19) is clamped.

4. Transmission joint according to claims 1 to 3, characterized in that the external face of the widest zone (15a) of the element for venting to the atmosphere (15) includes a channel (20) in which is engaged a clamping collar (21) holding the element clamped on the drive shaft.

5. Transmission joint according to one of claims 1 to 4, characterized in that the element (15) for venting to the atmosphere is made from a plastic material.

FIG. 1

FIG. 4

FIG. 2

FIG. 3

FIG. 5